# EUROPEAN PATENT SPECIFICATION

(11) **EP 3 754 264 B1**
(45) Date of publication and mention of the grant of the patent: **10.09.2025**
(21) Application number: 20171054.8
(22) Date of filing: 23.04.2020
(51) Int. Cl.: F24F 11/32, F24F 11/49, F24F 11/64, F24F 110/10, F24F 110/20, F24F 110/30, F24F 120/10

(54) **HEATING, VENTILATION, AND AIR CONDITIONING (HVAC) CONTROL SYSTEM**
STEUERUNGSSYSTEM FÜR HEIZUNG, LÜFTUNG UND KLIMAANLAGE (HLK)
SYSTÈME DE COMMANDE DE CHAUFFAGE, DE VENTILATION ET DE CLIMATISATION (HVAC)

(30) Priority: 20.06.2019 US 201916446736
(43) Date of publication of application: 23.12.2020
(73) Proprietor: The Boeing Company, Arlington, VA 22202 (US)
(72) Inventor: Thumati, Balaje T., Chicago, IL Illinois 60606-1596 (US); Subramania, Halasya Siva, Chicago, IL Illinois 60606-1596 (US); Shastri, Rajeev, Chicago, IL Illinois 60606-1596 (US); Kumar, Karthik Kalyana, Chicago, IL Illinois 60606-1596 (US)
(74) Representative: Hoffmann Eitle

(56) References cited:
- EP-A1- 3 557 365
- WO-A1-2018/102635
- US-A1- 2006 186 213
- US-A1- 2015 369 508
- US-A1- 2016 377 305

## Description

### BACKGROUND

Embodiments of the present invention generally relate to heating, ventilation, and air conditioning (HVAC) control systems, and more particularly to HVAC control systems that reduce nuisance actuation. Heating, ventilation, and air conditioning (HVAC) systems are used to control temperature and humidity within interior environments of buildings. Such buildings include office buildings, housing units, shopping centers, factories, airports, or the like. These systems can include numerous temperature sensors, infrared heat sensors, humidity sensors, LiDAR (Light Detection and Ranging), motion sensors, pressure sensors, or the like, to determine the environment of the given interior environment. Based on the sensor data received, a control system of an HVAC system operates heating devices, ventilation devices, and/or air conditioning devices to vary and maintain the environment at a predetermined comfort level for individuals within the interior environment.

Often during operation, nuisance, or intermittent, environmental conditions are detected by the HVAC control system. Such nuisances are not indicative of the actual environmental conditions within the interior environment, still the HVAC system reacts to such nuisances. Often, such reactions result in undesired variance of the interior environment, thereby resulting in reducing comfort of individuals in the environment. These reactions also unnecessarily cause operation of HVAC devices, overworking the devices, causing increase in operational costs, unnecessary wear, and reducing HVAC device life.

In US 2015/369508 A1, against which the independent claims have been delimited, an improvement in operation of a thermostat with regard to overall safety, efficiency, comfort, cost of operation or other such items is disclosed in which limits or restrictions are placed on remote control features of the thermostat based upon detection of occupancy, or locality of people or devices owned by people identified as potential occupants or the locality of a device utilized in attempting to send commands to the thermostat.

In US 2006/186213 A1 a climate control system having two or more stages of cooling operation or heating operation is provided for supplying conditioned air to a plurality of zones within a space, where the climate control system comprises a plurality of controllable zone dampers for controlling the supply of conditioned air to each of the plurality of zones, and a plurality of zone temperature sensors for periodically sensing temperature at preset intervals and transmitting sensed temperature information when the temperature of the zone has changed by more than a predetermined amount. The climate control system further comprises a thermostat that is adapted to initiate operation of the circulating air blower and the cooling system at less than full capacity when at least one zone temperature sensor transmits a sensed temperature that differs from the set point temperature by more than a specific amount, wherein the thermostat switches the circulating air blower and cooling system to full capacity operation when either the cooling system has operated at less than full capacity for more than a predetermined time or when more than a predetermined number of zone temperature sensors transmit sensed temperatures that differ from the set point temperature by more than a specific amount.

In US 2016/377305 A1 systems and methods for controlling the temperature and humidity in a plurality of spaces are provided. The systems may receive inputs from a temperature sensor, a humidity sensor, an occupancy sensor, a door sensor, and a window sensor. The systems may determine a first space is occupied and a second space is unoccupied. If the occupied space has both doors and windows closed, the system may direct motorized vents to shift air flow from an evaporator, burner and humidifier towards the occupied area and away from the unoccupied area.

### SUMMARY OF THE INVENTION

A need exists for minimizing effects caused as result of environmental nuisance detected by an HVAC system. Additionally, a need exists to implement an improved HVAC control system that identifies nuisance in environmental conditions, and modifies environmental conditions accordingly.

With those needs in mind, certain embodiments of the present disclosure provide a heating, ventilation, and air conditioning system that utilizes a heating, ventilation, and air conditioning control system to make determinations how to react to an anomaly, or predetermined change in an environmental parameter considered as nuisance factors. Based on historical data, and current trends, the control system determines an efficient operation of the heating, ventilation, and air conditioning system that minimizes overworking and increases comfort of individuals in a dwelling.

In at least one embodiment, a heating, ventilation, and air conditioning system for a dwelling may be provided that includes a heating system configured to heat an interior of the dwelling, an air conditioning system configured to cool the interior of the dwelling, and a ventilation system coupled to the heating system and air conditioning system and configured to convey air into areas within the dwelling. A control system is operably coupled to the heating system, the air conditioning system, and the ventilation system, and includes at least one sensor positioned and configured to detect an environmental parameter related to the interior of the dwelling, and one or more processors for receiving data generated by the at least one sensor. The one or more processors are configured to obtain an instruction to vary an environmental condition of the interior of the dwelling, analyze the environmental parameter detected by the at least one sensor in response to receiving the instruction to vary the environmental condition of the interior of the dwelling, and determine whether to ignore the instruction to vary the environmental condition of the interior of the dwelling based on an analysis of the environmental parameter.

Optionally, the one or more processors are further configured to ignore the instruction to vary the environmental condition of the interior of the dwelling based on the analysis of the environmental parameter. Alternatively the one or more processors are also configured to vary the environmental condition of the interior of the dwelling based on the analysis of the environmental parameter after ignoring the instruction to vary the environmental condition.

In another aspect the one or more processors are further configured to, responsive to not ignoring the instruction to vary the environmental condition of the interior of the dwelling, compare the environmental parameter detected by the at least one sensor to an environmental parameter within historical data in a local storage medium. Alternatively, the one or more processors are further configured to responsive to not matching the environmental parameter detected by the at least one sensor to the environmental parameter within the historical data, determine and apply a change with the control system based on the environmental parameter. In another aspect, one or more processors are further configured to, record the environmental parameter and the change determined in the historical data. In yet another aspect the one or more processors are further configured to, responsive to matching the environmental parameter detected by the at least one sensor to the environmental parameter within the historical data, apply a change with the control system.

Optionally, the obtained instruction to vary an environmental condition of the interior of the dwelling is received from a user interface. In another aspect the environmental parameter comprises at least one of temperature data, humidity data, occupancy positioning data, or air flow data.

In at least another one embodiment, a computer implemented method is provided that under control of one or more processors programmed with specific executable instructions, includes receiving an instruction to vary an environmental condition of an interior of a dwelling. The one or more processors also analyze an environmental parameter detected by at least one sensor in response to receiving the instruction to vary the environmental condition of the interior of the dwelling, and determine whether to ignore the instruction to vary the environmental condition of the interior of the dwelling based on an analysis of the environmental parameter.

Optionally, under control of one or more processors programmed with specific executable instructions, the method includes ignoring the instruction to vary the environmental condition of the interior of the dwelling based on the analysis of the environmental parameter, and varying the environmental condition of the interior of the dwelling based on the analysis of the environmental parameter after ignoring the instruction to vary the environmental condition. In another aspect, under control of one or more processors programmed with specific executable instructions, responsive to not ignoring the instruction to vary the environmental condition of the interior of the dwelling, comparing the environmental parameter detected by the at least one sensor to an environmental parameter within historical data in a local storage medium.

In another aspect, under control of one or more processors programmed with specific executable instructions, responsive to not matching the environmental parameter detected by the at least one sensor to the environmental parameter within the historical data, determine and apply a change with the control system based on the environmental parameter. Alternatively, under control of one or more processors programmed with specific executable instructions, the method includes recording the environmental parameter and the change determined in the historical data.

Optionally the method includes under control of one or more processors programmed with specific executable instructions, responsive to matching the environmental parameter detected by the at least one sensor to the environmental parameter within the historical data, apply a change with the control system.

In yet another embodiment a computer program product is provided that includes a non-signal computer readable storage medium that has computer executable code. The executable code obtains an instruction to vary an environmental condition of the interior of the dwelling, and analyzes the environmental parameter detected by the at least one sensor in response to receiving the instruction to vary the environmental condition of the interior of the dwelling. The code also ignores the instruction to vary the environmental condition of the interior of the dwelling based on an analysis of the environmental parameter, and responsive to not ignoring the instruction to vary the environmental condition of the interior of the dwelling, compares the environmental parameter detected by the at least one sensor to an environmental parameter within historical data in a local storage medium. The code also applies a change to the environmental condition of the interior of the dwelling with the control system.

Optionally, the executable code determines the change based on the environmental parameter detected. Alternatively, the code records the environmental parameter and the change determined in the historical data.

Optionally, applying the change to the environmental condition of the interior of the dwelling with the control system is responsive to matching the environmental parameter detected by the at least one sensor to an environmental parameter within the historical data. Alternatively, applying the change to the environmental condition of the interior of the dwelling with the control system is responsive to not matching the environmental parameter detected by the at least one sensor to an environmental parameter within the historical data.

### BRIEF DESCRIPTION OF THE DRAWINGS

Figure 1 illustrates a schematic view of a heating, ventilation, and air conditioning (HVAC) system, according to an embodiment of the present disclosure.
Figure 2 illustrates a schematic view of a floor plan utilizing a HVAC system, according to an embodiment of the present disclosure.
Figure 3 illustrates a schematic view of a HVAC control system, according to an embodiment of the present disclosure.
Figure 4 illustrates a block flow diagram of a method of controlling the interior environment of a dwelling, according to an embodiment of the present disclosure.

### DETAILED DESCRIPTION OF THE DISCLOSURE

The foregoing summary, as well as the following detailed description of certain embodiments will be better understood when read in conjunction with the appended drawings. As used herein, an element or step recited in the singular and preceded by the word "a" or "an" should be understood as not necessarily excluding the plural of the elements or steps. Further, references to "one embodiment" are not intended to be interpreted as excluding the existence of additional embodiments that also incorporate the recited features. Moreover, unless explicitly stated to the contrary, embodiments "comprising" or "having" an element or a plurality of elements having a particular condition may include additional elements not having that condition.

Certain embodiments of the present disclosure provide a system and method to detect nuisance, or intermittent, fluctuations in the interior (e.g. interior environment) of a dwelling, and to adjust control inputs to a heating, ventilation, and air conditioning (HVAC) system without compromising occupancy comfort. Sensor data, including temperature, humidity, pressure, and the like is collected to identify the interior environment being experienced by the occupants. The data is then analyzed to detect anomalies that may result in a variance in the HVAC system. Prior to the HVAC system varying the heating, cooling, or ventilation, the HVAC control system evaluates if the HVAC system can be retained in the current state without compromising occupancy comfort, or alternatively, with minimum variance while maintaining occupancy comfort. In particular, several evaluation criteria are considered, including operating cost, comfort index, other resources, and the like. By providing a real-time evaluation, operating costs of the HVAC system are decreased while wear of the HVAC equipment and corresponding maintenance is also reduced.

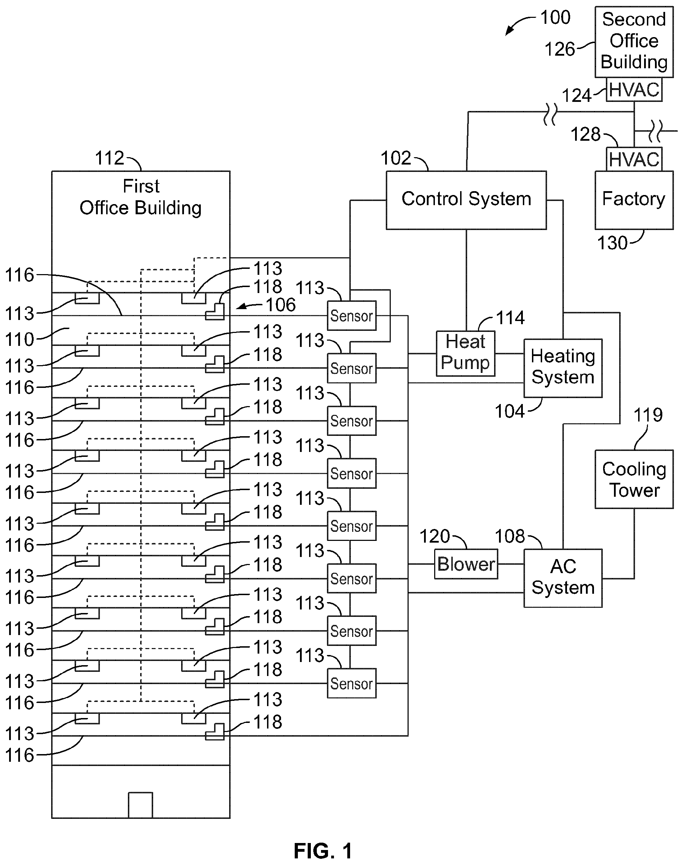

Figure 1 illustrates an example of a heating, ventilation, and air conditioning (HVAC) system 100. The HVAC system 100 includes a control system 102 operably coupled to a heating system 104, a ventilation system 106, and an air conditioning system 108. Each of the control system 102, the heating system 104, the ventilation system 106, and the air conditioning system 108 may be located at least partially within the interior environment 110 of a dwelling 112 such as a first office building, an apartment building, a house, and apartment, or other multi-room or large-room volume that may be inhabited.

While described as a single HVAC control system 102, this is for exemplary purposes only, and the control system 102 may include a plurality of control units each coupled to one of the heating system 104, the ventilation system 106, and/or the air conditioning system 108, and each in communication with one another to perform the methods described herein. Similarly, each of the heating system 104, the ventilation system 106, and the air conditioning system 108 may include plural heating units, ventilation units, and air conditioning units, each providing heating, ventilation, and air conditioning functionality. For example, when the dwelling is an office building, there may be a heating unit for each floor, ventilation units on every floor, and air conditioning units on every other floor.

The control system 102 may also be coupled to sensors 113 to receive data related to the interior environment 110 of the dwelling, ambient conditions outside a building, and also the data related to a heating system 104, ventilation system 106, and air conditioning system 108. In examples, the type of sensors 113 include temperature sensors, infrared heat sensors, air flow rate sensors, location sensors, humidity sensors, and the like. More than one type of sensor may be located at the same sensing location.

The HVAC control system 102 is coupled to and in communication with an HVAC system 124 of a second office building 126 and an HVAC system 128 of a factory 130. Specifically, the HVAC control system 102 may be coupled to a numerous other HVAC systems associated with other dwellings, in remote or separate locations, such as other cities, states, countries, or continents. In particular, the HVAC control system 102 communicates with each HVAC system over the internet, in the cloud, over the air, through a wire based connection, through a wireless based connection, or the like such that information from sensors and other inputs of one HVAC system may be utilized in making determinations related to another HVAC system in a different location.

Each of the heating system 104, the ventilation system 106, and the air conditioning system 108 may include units of each system 104, 106, and 108 that are located exterior to the dwelling 112. Such heating, ventilation, and air conditioning units may be coupled to one another, or alternatively separate from one another with a common HVAC control system 102.

The heating system 104 in one example is a boiler. The heating system 104 generates and conveys heat into the ventilation system 106. Such heat may be from induction heating, convection heating, electric heating, or the like. In one example, a heat pump 114 conveys either heated fluid or air through conduits, ducts, or the like to the ventilation system 106.

The ventilation system 106 includes a plurality of ducts 116, conduits, or the like that convey air through the dwelling 112. In one example, the ducts 116 are interconnected and have ventilation blowers 118 that convey air through the ducts 116. In one example, the ventilation blowers 118 include a supply blower and a return blower to convey the air thought the ventilation system 106. Optionally, auxiliary ventilation blowers may be added to the ventilation system 106.

The air conditioning system 108 in one example includes a cooling tower 119 to provide cooled fluid, air, or the like through conduits, ducts, or the like to the ventilation system 106. Such cooling may be provided by a coolant, a heat exchanger, or the like. In one example, the air conditioning system 108 includes at least one air conditioning blower 120 that conveys cooled air to the ventilation system 106.

The HVAC system 100 is an exemplary HVAC system and the control systems, including control system 102 described herein can operate other exemplary HVAC systems. Such other HVAC systems may include an economizer, such as a roof-top unit that utilizes outside air to heat and/or cool without use of a boiler or chiller. Thus, while a boiler and chiller may be utilized in some examples, in other examples, other heating, cooling, and ventilation systems may be utilized.

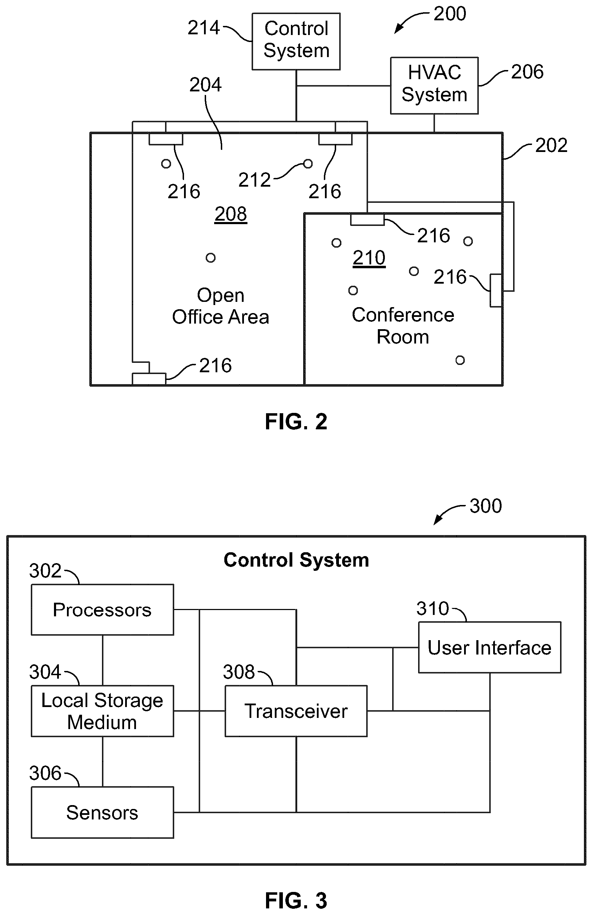

Figure 2 illustrates an exemplary floor 200 of a dwelling 202 that has an interior environment 204 controlled by an HVAC system 206. In one example, the dwelling 202 is the dwelling 112 of Figure 1. In another example, the HVAC system 206 is the HVAC system 100 of Figure 1.

The floor 200 includes an open office area 208 and a conference room 210. In one example, the floor 200 is a floor of an office building and the office area includes a plurality of office working stations such as cubicles. Alternatively, the open office area 208 can include a combination of offices and cubicles. Specifically, the floor 200 provided illustrates a simplified floor plan for the purposes of facilitating explanation of the operation of the HVAC system 206. On the floor 200 numerous dots 212 are illustrated that in one example, each represent an occupant, or person.

The HVAC system 206 includes a control system 214, that is one example is the control system 102 of Figure 1. Specifically, the control system 214 includes a plurality of sensors 216 that continually obtain environmental data related to each floor 200. In example embodiments sensors 216 are the sensors 103 of Figure 1, and may communicate with control system 214 with a network that is wired, wireless, digital, analog, or the like. In addition, the sensors 216, along with actuators associated with the HVAC system, may be in communication with, and transmits information through the Internet of Things (IoT) for communication to remote locations. Remote locations include remote servers, the cloud, one or more processors geographically remote from the dwelling that utilizes the HVAC control system, or the like. In other examples, the sensors 216 include temperature sensors, infrared heat sensors, air flow rate sensors, location sensors, LiDAR, humidity sensors, or the like. In one example, the location sensors are part of a global positioning system that utilizes cell phones, smart devices, other over the air communication devices, or the like in order to determine the location of people, or objects on the floor. In this manner, the sensors 216 are able to continuously obtain environmental data related to interior environment 204 of the floor 200 in order to provide to the control system 214. Based on this environmental data, the control system 214 actuates components, including individual heating units, individual cooling units, ventilation blowers, or the like, utilizing the methodologies described herein. Such actuation includes increasing or decreasing the air temperature, and the conveyance of air through the ventilation conduits. In one example the control system 214, sensors 216, and actuator (not shown) are within a cyber-physical HVAC control system that may be controlled from a remote location through the Internet of Things (IoT). To this end, the HVAC control system may include one or more local storage mediums with remote or cloud platforms that utilize an intermediate network layer. Such local storage mediums may include a machine learning algorithm such that the one or more processor may make determinations related to the HVAC system remote from the dwelling, utilizing the HVAC system. In this manner, either through wire or wireless communication, the HVAC control system may have one or more processors utilized to make determinations for, and communicate with, multiple HVAC systems in differing locations.

Figure 3 illustrates an example control system 300 that may implement one or more of the methodologies described herein. In one example, the control system 300 is the HVAC control system 102 of Figure 1, or alternatively, the control system 214 of Figure 2. The control system 300 includes one or more processors 302, a local storage medium 304, one or more sensors 306, and a transceiver 308. In one example, the one or more sensors 306 are the sensors 216 of Figure 2 and include temperature sensors, infrared heat sensors, air flow rate sensors, location sensors, humidity sensors, or the like.

The one or more processors 302 in one example are configured to execute instructions to operate an HVAC system. In one example, the instructions are stored within the local storage medium 304. Alternatively, the instructions are received from a remote location, such as through a communication through the internet, on the cloud, or the like.

Specifically, the control system 300 is configured to execute a set of instructions that are stored in one or more local storage medium 304 (such as one or more memories), in order to process data. For example, the control system 300 may include or be coupled to one or more memories. The local storage medium 304 may also store data or other information. The local storage medium 304 may be in the form of an information source or a physical memory element within a processing machine.

The set of instructions may include various commands that instruct the control system 300 as a processing machine to perform specific operations such as the methods and processes of the various embodiments of the subject matter described herein. The set of instructions may be in the form of a software program. The software may be in various forms such as system software or application software. Further, the software may be in the form of a collection of separate programs, a program subset within a larger program or a portion of a program. The software may also include modular programming in the form of object-oriented programming. The processing of input data by the processing machine may be in response to user commands, or in response to results of previous processing, or in response to a request made by another processing machine.

It is to be understood that the processing or control units may represent circuits, circuitry, or portions thereof that may be implemented as hardware with associated instructions (e.g., software stored on a tangible and non-transitory computer readable storage medium, such as a computer hard drive, read-only memory (ROM), random access memory (RAM), or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the control system 300 may represent processing circuitry such as one or more of a field programmable gate array (FPGA), application specific integrated circuit (ASIC), microprocessor(s), and/or the like. The circuits in various embodiments may be configured to execute one or more algorithms to perform functions described herein. The one or more algorithms may include aspects of embodiments disclosed herein, whether or not expressly identified in a flowchart or a method.

As used herein, the terms "software" and "firmware" are interchangeable, and include any computer program stored in a local storage medium (for example, one or more memories) for execution by a computer, including RAM memory, ROM memory, Erasable Programmable Read-Only Memory (EPROM), Electrically Erasable Programmable Read-Only Memory (EEPROM), and non-volatile RAM (NVRAM) memory. The above memory types are exemplary only, and are thus not limiting as to the types of memory usable for storage of a computer program.

Additionally, the transceiver 308, in one example, is a separate receiver and transponder that transmits and receives signals to and from the control system 300. The transceiver 308 may receive inputs from a user interface 310 such as an environmental control panel that is able to be programmed by an individual for controlling the interior environment for a dwelling, floor of a dwelling, room in a dwelling, or the like. In this manner, user interface 310 receives an instruction to vary an environmental condition of the interior of the dwelling. In one example, such an environmental control panel can receive temperature settings, including setting predetermined periods for increasing and decreasing temperature in a dwelling such as after work hours when workers are not anticipated to be within the dwelling. In another example, the transceiver 308 allows instructions to be received by the one or more processor remote of the dwelling. In this manner, in an embodiment wherein software is utilized at least in part as an application on an individuals' smart phone, watch, or the like, the instructions may be received remote from the dwelling.

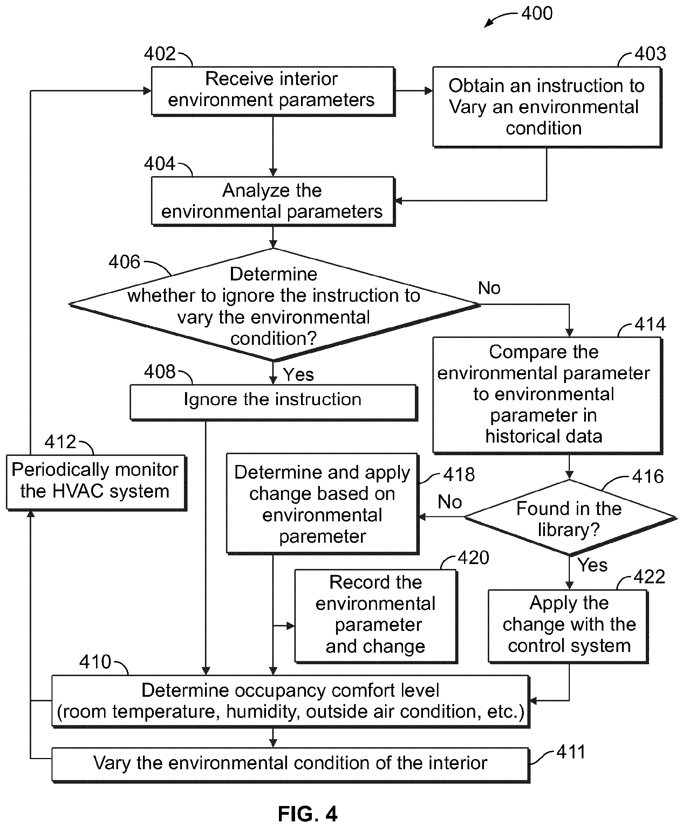

Figure 4 illustrates a method 400 of controlling the interior environment of a dwelling, including dwellings previously described. In one example, this method is provided in software that includes an algorithm. Specifically, the software may be stored in a local storage medium, such as the local storage medium 304 of Figure 3 and provide instructions that may be executed by one or more processors, such as the one or more processors 302 of Figure 3. The software may be implemented as a program, application, downloadable, or the like that may be implemented by the control system. In an example, an application is provided for a hand-held device such as a smart phone, other smart device, tablet, cell phone, watch, or the like that communicates with the control system 300 through the transceiver. Thus, an individual may control the operation of the control system remotely by communicating with the control system.

At step 402, the control system receives interior environmental data or parameters from at least one sensor. Such environmental parameters include temperature data, air flow rate data, occupant location data, humidity data, or the like. Such information may also include information from an entire dwelling, individual floors, portions, sections, or areas of a floor, individual rooms in a dwelling, or the like. The control system receives the interior environmental data from sensors disposed through an entire dwelling and sorts the data accordingly based on the area from which the data is retrieved.

At step 403, the control system obtains an instruction to vary an environmental condition of the interior of the dwelling. Instructions include automatic instructions, such as those provided by the one or more processors based on determinations made by the one or more processors as a result of changes in environmental data or parameters received at step 402 from the sensors. Instructions also include manual instructions provided by a user as described in relation to step 403, including instructions received at a user interface. In one example, the instruction to vary the environmental condition is received from the user interface 310 of Figure 3. In one example, such an environmental control panel can receive temperature settings, including setting predetermined periods for increasing and decreasing temperature in a dwelling such as after work hours when workers are not anticipated to be within the dwelling. In another example, the transceiver allows instructions to be received by the one or more processor remote of the dwelling. In this manner, in an embodiment wherein software is utilized at least in part as an application on an individuals' smart phone, watch, or the like, the instructions may be received remote from the dwelling.

At step 404, one or more processors analyze the environmental parameters detected by the at least one sensor in response to receiving an instruction to vary the environmental condition of the interior of the dwelling. In one example, the analysis of the incoming data includes determining if the instruction to vary the environmental condition is an anomaly within a data set. An anomaly may be a rise in temperature, humidity, or other environmental condition over a threshold value, or decrease in temperature, humidity, or other environmental condition under a threshold value. In one example, clustering is utilized to determine if the instruction is an anomaly. The anomaly when used herein is considered an environmental parameter. Alternatively, other analytic techniques are utilized in order to pin-point anomalies. In detecting the anomaly, the analytic techniques determine changes in environmental parameters, including fluctuation above or below a threshold in the interior environment over a given time. An individual may make determinations of threshold values to utilize in the one or more processors determining a change in an environmental parameter, and resulting change in environmental condition represents an anomaly.

At step 406, the one or more processors determine whether to ignore the instruction to vary the environmental condition of the interior of the dwelling based on an analysis of the environmental parameter. In particular, based on the analysis of the environmental parameter, an anomaly is either determined to be detected, or the anomaly is not presented. When an environmental anomaly is determined not to be present, the control system ignores the instruction, while if the environmental anomaly is determined to be present, additional analysis of the anomaly is undertaken.

As one example of anomaly data where environmental changes are needed; a door or window of the dwelling is left open, or is opened more frequently than normal, causing the outside environment to alter the interior environment. Such change results in variance in the current HVAC system settings to compensate for the interior environmental changes. In this one example, the instruction obtained by the control system is an automatically generated instruction and the control system verifies that the anomaly is present in the environment. The automatically generated instruction may be generated by the control system itself, or by a remote monitoring system that transmits a signal that includes the instruction to the control system. By verifying the presence of the anomaly, if a faulty sensor provides inaccurate data related to an anomaly, other environmental parameters are utilized to ensure the anomaly is presented in the environment.

In yet another example of an anomaly that provides change for an interior environment, when a meeting or conference is being held causing the number of people within a certain area to increase significantly above a threshold amount within the interior environment. Such a gathering of individuals can cause excess body heat to be generated, again altering the interior environment in such a way that the HVAC system compensates for the change in the environment. In this example, the instruction to vary the environmental condition of the interior of the dwelling may be obtained by the control system through a determination based on an environmental parameter, or from a monitoring system based on an environmental parameter. As a result of analyzing at least one environmental parameter, an anomaly is detected because of the increase of heat in the interior environment.

In contrast, an example of when a change in the interior environment is unnecessary, or change is not needed to the degree the anomaly data suggests (thus representing a nuisance), is when an individual enters a building on a hot day and immediately goes to the thermostat and manually decreases the temperature of the thermostat in order to more quickly cool themselves, without consideration of others in the environment, or work load being placed onto the HVAC system. In such an event, when a manual instruction is provided to vary in the environmental condition of the interior of the dwelling, the forced decrease in temperature results in inefficient cooling of an entire area or floor. Additionally, if the temperature remains at this new low temperature, other individuals on the floor may become too cold, resulting in uncomfortable occupants and requiring a readjustment of the temperature back to the original setting. Thus, unnecessary load and wear is then placed back of the HVAC system to heat the area back to the original temperature. In such an example, the instruction to vary an environmental condition of an interior of a dwelling may be obtained manually through a user interface. Based on the analysis, no anomaly is detected or determined, and the manual instruction is ignored. In such an example, the control system may automatically reset the thermostat to the setting prior to the manual alteration, or may continue to ignore the manual setting until an anomaly is detected or determined.

At step 408, if a determination is made that no anomaly has occurred and the instruction to vary the environmental condition of the interior of the dwelling is to be ignored at 406, flow goes downward and, the one or more processors ignore the instruction to vary the environmental condition of the interior environment of the dwelling based on the analysis of the environmental parameter. In this example, the control system keeps the existing control input to the HVAC system the same. Specifically, the control system continues operating the HVAC system as before. Because no anomaly is detected or determined, no change is made. Consequently, the inefficient nuisance change is prevented, keeping the interior environment as desired by other in the interior environment, while also providing efficient operation of the HVAC system.

At step 410, the occupancy comfort level is determined as a check to ensure the HVAC system is operating in a predetermined manner. In one example, the occupancy comfort level is determined by continuing to monitor the interior environment, including the temperature, humidity, number of occupants, outside air conditions and temperature, and the like compared to ideal interior environmental conditions based on historical data. In this manner, a check is provided to ensure a condition requiring the changing or actuation of the HVAC system to control the interior environment has not occurred as a result of an actual non-anomaly change in interior environmental conditions.

At step 411, the one or more processors vary the environmental condition of the interior of the dwelling based on the analysis of the environmental parameter after ignoring the instruction to vary the environmental condition in response to determining the occupancy comfort level. Specifically, if at step 410, the occupancy comfort level is not ideal, the one or more processors may still vary the environmental condition of the interior of the dwelling, even though an instruction to vary the environmental condition was previously ignored. As an example, an individual may be hot because they just came inside on a hot day and provides an instruction to lower the temperature by five (5) degrees Fahrenheit. At step 408, this instruction is ignored because the threshold change required to justify a 5° degree Fahrenheit drop is not provided in historical data; however, at step 411, because the comfort level of individuals in an environment is checked in response to the instruction being ignored, the one or more processors may determine that a two (2) degree Fahrenheit drop is warranted based on the environmental parameters determined.

At step 412, after the occupancy comfort level is determined, the sensors continue periodically monitoring the internal environment of the interior of the dwelling. For example, the period of monitoring can be between every 5 seconds and every 10 minutes. In other examples the period is greater than every 10 minutes. In another example, the monitoring during predetermined intervals, such as Monday through Friday between 7:00 A.M. and 6:00 P.M, the monitoring occurs every 30 seconds, while Monday through Friday 6:00 P.M. to 7:00 A.M. and weekends the monitoring occurs every 20 minutes. So, different predetermined periods may occur at different predetermined intervals. Then, sensing continues, and the method starts back at step 402 with the control system receiving interior environmental data from the sensors.

At step 414, one or more processors responsive to not ignoring the instruction to vary the environmental condition of the interior of the dwelling at step 406, compare the environmental parameter detected by the at least one sensor to an environmental parameter within historical data in a local storage medium. In one example, the anomaly is checked against the library of previously reported issues by utilizing a look up table where the previously reported issues are provided as historical data and the anomaly is compared against the historical data. In this example, the anomaly may include an increase in temperature over a pre-determined threshold, such as two (2) degrees Fahrenheit, an increase in humidity above a pre-determined threshold, or the like. In another example, the historical data is within a look-up table. Alternatively, an environmental parameter may be compared to an environmental parameter within the historical data. For example, the environmental parameter of seventy-two (72) degrees Fahrenheit may be compared to historical environmental parameters measuring temperature in degrees Fahrenheit.

At step 416, a determination is made regarding whether the anomaly or environmental parameter is within the historical data of the library. In one example, an environmental parameter detected or determined is compared to environmental parameters with historical data within a local storage medium. In another example, when a change in an environmental parameter results in an anomaly being detected, the environmental parameter may be compared to environmental parameters within the historical data to determine control inputs to apply. Specifically, a determination is made whether environmental parameters detected by the at least one sensor match with environmental parameters within the historical data in the local storage medium.

At step 418, responsive to not matching the environmental parameter detected by the at least one sensor to an environmental parameter within the historical data, determining and applying a change with the control system based on the environmental parameter. In one example the change is calculated based on the predetermined comfort level of occupants, and the HVAC system is actuated accordingly. In one example, a door to a building remains open for an extended period of time because individuals are bringing office furniture into the building during the wintertime causing the temperature to drop significantly in an area of a floor. As a result, either an individual increases the temperature on the thermostat in order to combat the cold air coming through the door while the furniture is being delivered, or the resulting change in temperature detected by a temperature sensor, or infrared heat sensor, increases above a threshold, prompting the heating command. In this example, temperature sensors, or infrared heat sensors detect the decrease in temperature in the room proximate to the doorway as compared to other areas. Similarly, sensors associated with the door may register the amount of times the door remains in an opened condition compared to what a threshold amount during that period of time of day. Additionally, global positioning system (GPS) sensors may detect more individuals than a threshold amount within the building.

Based on the information provided by the sensors, the environmental parameters are communicated to the processor to make the determination whether the conditions provided are within the look up table at step 416. In one example, the one or more processors determine if a change in temperature in the area approximate to the door is within the look up table or historical data. If the temperature drop is not provided in the look up table or historical data, then at step 418 the one or more processors determines the increase in heat to provide within the interior environment based on the temperature change, including the locations within the ventilation system the heat will be provided. This determination may, in one example, be made by not altering a change in thermostat temperature made manually by an individual. Alternatively, the determination may be calculated based on variables such the change in temperature, number of occupants, and location of the change in temperature. In sum, the one or more processors determine how to address the change in environmental condition without the benefit of historical data to assist in making the determination regarding the most efficient manner in changing the environmental condition.

In an alternative example, both the change in temperature and the time the doors remain open for a predetermined period are compared to historical data at step 416. If the change in temperature, and time the door remains open a predetermined period are not within the historical data, then again at step 418, the one or more processors make determinations regarding how to vary temperature. In yet another example, the one or more processors calculate a probability of the doors being opened for an unusual amount of time during a predetermined period causing changes in the interior environment based on changes in the temperature in the area adjacent the door, and based on the amount of time the door is open during a predetermined period. Then, if the look up table does not have the calculated probability, again at step 418, the one or more processors vary the supply of heat within the office, including increasing the temperature of air and/or the location of increased air within the office building.

Thus, at step 418, if an event is presented where a temperature, timing, or the like is not presented within a look-up table, or within the historical data, the one more processors make a determination if the anomaly presents a condition where variance in the HVAC system is warranted, or if the anomaly does not require additional changes within the HVAC system. In one example, an algorithm is utilized to maximize the amount of comfort of individuals in the interior environment while minimizing the cost of varying the environment to respond to the changes in environmental conditions. Thus, based on the environmental conditions and parameters determined by the sensors, the ideal comfort for occupants is then determined. Therefore, in a case where an individual is merely varying temperature based on an individual's desire not to be too hot or cold, and that is not an optimum variance for the rest of the occupants in an area, the one or more processors may prevent the variance and instead provide the environment that is most suitable for all the individuals on a floor, or in an area as provided at step 410.

At step 420, the one or more processors record the environmental parameter and the change determined in the historical data. Thus, in the above example, when a door is opened an unusual amount of time as a result of furniture being moved is causing the interior environment to be changed requiring a variance in the HVAC system, and such conditions are not within a library, then the environmental parameter that resulted in the change is recorded within the library along with the change determined based on the environmental parameter. This may also include information and data related to the environmental parameter that lead to the change in the control system along with the change that occurred accordingly. In particular, by recording the environmental parameter, and data related to the environmental parameter, a log can be provided that may be analyzed or utilized by the one or more processors, or alternatively aggregated with other environmental parameter data.

In one example, a learning algorithm is provided such that when similar situations, or events, occur, the one or more processors make determinations related to how the interior environmental conditions may be altered in response to a similar detected environmental parameter. The learning algorithm may be in one or more memories of the HVAC control system, in the cloud, in a software application, at a remote device in communication with the HVAC control system, or the like. Specifically, in one example, the HVAC control system is coupled to numerous office buildings all over the world, such as when the HVAC control system is implemented by a multinational corporation having building all over the globe. Thus, the library is a voluminous database that includes data from each building. A learning algorithm may be utilized, including providing rewards, weights, and the like when similar anomalies and/or environmental parameters occur. As a result, the change determined and applied by the HVAC control system to a subsequent anomaly and/or environmental parameter provides a more efficient result than during a previous determination and change.

At step 422, the one or more processors responsive to matching the environmental parameter detected by the at least one sensor to the environmental parameter within the historical data at step 416, apply a change with the control system. Specifically, if at step 416, the anomaly or environmental parameter is found in the library, then at step 422 the one or more processors applies a change in the control system to vary the environmental condition of the interior of the dwelling. In particular, with the anomaly or environmental parameter known, the HVAC control system is able to respond in an optimal manner. In one example, a look up table is used, and the control system operates to react to the anomaly as provided in the look up table. Thus, if the look up table indicates heating is to increase by five degrees for a half hour at a predetermined vent, the HVAC system responds accordingly.

Alternatively, in an example when a learning algorithm is utilized in association with a neural network, the change applied when the environmental parameter detected matches with an environmental parameter within historical data may vary based on actions that occurred during a previous events to a known environmental parameter or anomaly. For example, the venting of heated or cooled air in certain locations may be modified in an attempt to minimize the effect of a sudden temperature drop of more than five degrees Fahrenheit in an area of a floor of a building. So, in one instance, or first event, in response to the detected environmental parameter or anomaly of a temperature drop of more than five degrees Fahrenheit, heating increases by five degrees for a half hour at a predetermined vent, but in a second event of a detected temperature drop of more than five degrees Fahrenheit, heating increases by two degrees for an hour at two different vents. If the second event improves normalizing the interior environment in response to the anomaly more efficiently than the response in the first event, the neural network shall receive a reward as a result of the second event, and these variables are provided more weight to address a similar anomaly in the future. Such calculations and data determined by a learning algorithm is then stored in the historical data.

Thus, in a third event of a detected temperature drop of five degrees Fahrenheit the HVAC system will provide a heating increase of two degrees at three vent locations for an hour based on the recorded historical data being reapplied within the learning algorithm. Then, if this third event is less efficient than the second event, a lesser weight is provided for this solution in future determinations. In this manner, the HVAC system is able to, over time, learn, or determine, the most efficient responds to a given anomaly. Specifically, when a HVAC control system includes a database that includes many buildings worldwide, the learning algorithm has increased anomalies, or environmental parameters to sample from, thus increasing the speed at which an optimal efficient response may be determined. That optimal efficient response may then be implemented to each building and HVAC system accordingly that is in communication with the HVAC control system, saving energy and reducing unnecessary operations of the HVAC system. Once the response is applied, at 410, again the comfort level for the individuals is determined to ensure the variances in the interior environment provided are satisfactory to the individuals in the environment. In this manner a check is provided to ensure the response has been successful.

Thus, in at least one embodiment, a heating, ventilation, and air conditioning (HVAC) system for a dwelling may be provided that includes a heating system configured to heat an interior of the dwelling, an air conditioning system configured to cool the interior of the dwelling, and a ventilation system coupled to the heating system and air conditioning system and configured to convey air into areas within the dwelling. A heating, ventilation, and air conditioning control system may be operably coupled to the heating system, air conditioning system, and ventilation system. The heating, ventilation, and air conditioning control system may include at least one processor, at least one sensor positioned and configured to detect an environmental parameter related to the interior of the dwelling, and a local storage medium to store program instructions accessible by the processor. Responsive to execution of the program instructions, the processor receives an instruction to vary an environmental condition of the interior of the dwelling, analyzes the environmental parameter detected by the at least one sensor in response to receiving the instruction to vary the environmental condition of the interior of the dwelling, and determines whether to ignore the instruction to vary the environmental condition of the interior of the dwelling based on the analysis of the environmental parameter.

In another example, analyzing the environmental parameter may include comparing the environmental parameter detected by the at least one sensor to an environmental parameter within historical data in the local storage medium. Optionally, responsive to execution of the program instructions, the processor applies instructions to vary the environmental condition of the interior of the dwelling in response to matching the environmental parameter detected by the at least one sensor to the environmental parameter within the historical data in the local storage medium. In one aspect, the instructions applied are different than the instructions received.

In another aspect, responsive to execution of the program instructions, the processor ignores the instruction to vary the environmental condition of the interior of the dwelling based on the analysis of the environmental parameter. Optionally, responsive to execution of the program instructions, the processor varies the environmental condition of the interior of the dwelling based on the analysis of the environmental parameter after ignoring the instruction to vary the environmental condition. In another aspect, responsive to execution of the program instructions, the processor records the analysis of the environmental parameter in the historical data.

In another example, the received instruction to vary an environmental condition of the interior of the dwelling is manually provided. Optionally, the environmental parameter comprises at least one of temperature data, humidity data, occupancy positioning data, or air flow data.

In at least one embodiment a computer implemented method may be provided that under control of one or more processors programmed with specific executable instructions, includes receiving an instruction to vary an environmental condition of the interior of the dwelling, analyzing an environmental parameter detected by at least one sensor in response to receiving the instruction to vary the environmental condition of the interior of the dwelling, and determining whether to ignore the instruction to vary the environmental condition of the interior of the dwelling based on the analysis of the environmental parameter.

Optionally, analyzing the environmental parameter may include comparing the environmental parameter detected by the at least one sensor to an environmental parameter within historical data in the local storage medium. In another aspect, the method also includes determining instructions to vary the environmental condition of the interior of the dwelling based on a determination of a learning algorithm that utilizes the environmental parameter. In yet another aspect, the method also includes applying the instruction to vary the environmental condition of the interior of the dwelling based on the determination of the learning algorithm. Optionally, varying the environmental condition of the interior of the dwelling is based on the determination of the learning algorithm after ignoring the received instruction to vary the environmental condition. In another aspect the method also includes recording the determination of the learning algorithm in the historical data.

In at least one embodiment a computer program product comprising a non-signal computer readable storage medium comprising computer executable code is provided in order to receive an instruction to vary an environmental condition of an interior of a dwelling, analyze an environmental parameter detected by at least one sensor in response to receiving the instruction to vary the environmental condition of the interior of the dwelling, and apply instructions to vary the environmental condition of the interior of the dwelling in response to the environmental parameter detected by the at least one sensor.

Optionally, the instructions applied to vary the environmental condition of the interior of the dwelling in response to the environmental parameter detected by the at least one sensor is received from a look up table. Alternatively, the instructions applied to vary the environmental condition of the interior of the dwelling in response to the environmental parameter detected by the at least one sensor is received from a determination made by a learning algorithm.

In one aspect, the at least one sensor is one of a temperature sensor, infrared heat sensor, humidity sensor, or pressure sensor. In another aspect, the instruction to vary an environmental condition of an interior of a dwelling is received remote from the dwelling.

Further, the disclosure comprises examples according to the following clauses:
Clause 1. A heating, ventilation, and air conditioning system for a dwelling comprising: a heating system configured to heat an interior of the dwelling; an air conditioning system configured to cool the interior of the dwelling; a ventilation system coupled to the heating system and air conditioning system and configured to convey air into areas within the dwelling; a control system operably coupled to the heating system, the air conditioning system, and the ventilation system, comprising: at least one sensor positioned and configured to detect an environmental parameter related to the interior of the dwelling; one or more processors for receiving data generated by the at least one sensor and configured to: obtain an instruction to vary an environmental condition of the interior of the dwelling; analyze the environmental parameter detected by the at least one sensor in response to receiving the instruction to vary the environmental condition of the interior of the dwelling; and determine whether to ignore the instruction to vary the environmental condition of the interior of the dwelling based on an analysis of the environmental parameter.

Clause 2. The heating, ventilation, and air conditioning system of clause 1, wherein the one or more processors are further configured to: ignore the instruction to vary the environmental condition of the interior of the dwelling based on the analysis of the environmental parameter.

Clause 3. The heating, ventilation, and air conditioning system of any of clauses 1-2, wherein the one or more processors are further configured to: vary the environmental condition of the interior of the dwelling based on the analysis of the environmental parameter after ignoring the instruction to vary the environmental condition.

Clause 4. The heating, ventilation, and air conditioning system of any of clauses 1-3, wherein the one or more processors are further configured to, responsive to not ignoring the instruction to vary the environmental condition of the interior of the dwelling, compare (414) the environmental parameter detected by the at least one sensor to an environmental parameter within historical data in a local storage medium.

Clause 5. The heating ventilation and air conditioning system of any of clauses 1-4, wherein the one or more processors are further configured to responsive to not matching the environmental parameter detected by the at least one sensor to the environmental parameter within the historical data, determine and apply a change with the control system based on the environmental parameter.

Clause 6. The heating, ventilation, and air conditioning system of any of clauses 1-5, wherein the one or more processors are further configured to, record the environmental parameter and the change determined in the historical data.

Clause 7. The heating, ventilation, and air conditioning system of any of clauses 1-6, wherein the one or more processors are further configured to, responsive to matching the environmental parameter detected by the at least one sensor to the environmental parameter within the historical data, apply a change with the control system.

Clause 8. The heating, ventilation, and air conditioning system of any of clauses 1-7, wherein the obtained instruction to vary an environmental condition of the interior of the dwelling is received from a user interface.

Clause 9. The heating, ventilation, and air conditioning system of any of clauses 1-8, wherein the environmental parameter comprises at least one of temperature data, humidity data, occupancy positioning data, or air flow data.

Clause 10. A computer implemented method, comprising: under control of one or more processors programmed with specific executable instructions, receiving an instruction to vary an environmental condition of an interior of a dwelling; analyzing an environmental parameter detected by at least one sensor in response to receiving the instruction to vary the environmental condition of the interior of the dwelling; and determining whether to ignore the instruction to vary the environmental condition of the interior of the dwelling based on an analysis of the environmental parameter.

Clause 11. The method of clause 10, further comprising: under control of one or more processors programmed with specific executable instructions, ignoring the instruction to vary the environmental condition of the interior of the dwelling based on the analysis of the environmental parameter, and varying the environmental condition of the interior of the dwelling based on the analysis of the environmental parameter after ignoring the instruction to vary the environmental condition.

Clause 12. The method of any of clauses 10-11, further comprising: under control of one or more processors programmed with specific executable instructions, responsive to not ignoring the instruction to vary the environmental condition of the interior of the dwelling, comparing the environmental parameter detected by the at least one sensor to an environmental parameter within historical data in a local storage medium.

Clause 13. The method of any of clauses 10-12 further comprising: under control of one or more processors programmed with specific executable instructions, responsive to not matching the environmental parameter detected by the at least one sensor to the environmental parameter within the historical data, determine and apply a change with the control system based on the environmental parameter.

Clause 14. The method of any of clauses 10-13 further comprising: under control of one or more processors programmed with specific executable instructions, recording the environmental parameter and the change determined in the historical data.

Clause 15. The method of any of clauses 10-14 further comprising: under control of one or more processors programmed with specific executable instructions, responsive to matching the environmental parameter detected by the at least one sensor to the environmental parameter within the historical data, apply a change with the control system.

Clause 16. A computer program product comprising a non-signal computer readable storage medium comprising computer executable code to: obtain an instruction to vary an environmental condition of the interior of the dwelling; analyze the environmental parameter detected by the at least one sensor in response to receiving the instruction to vary the environmental condition of the interior of the dwelling; ignore the instruction to vary the environmental condition of the interior of the dwelling based on an analysis of the environmental parameter; responsive to not ignoring the instruction to vary the environmental condition of the interior of the dwelling, compare the environmental parameter detected by the at least one sensor to an environmental parameter within historical data in a local storage medium; and apply a change to the environmental condition of the interior of the dwelling with the control system.

Clause 17. The computer program product of any of clause 16, comprising computer executable code to determine the change based on the environmental parameter detected.

Clause 18. The computer program product of any of clauses 16-17, comprising computer executable code to record the environmental parameter and the change determined in the historical data.

Clause 19. The computer program product of any of clauses 16-18, wherein applying the change to the environmental condition of the interior of the dwelling with the control system is responsive to matching the environmental parameter detected by the at least one sensor to an environmental parameter within the historical data.

Clause 20. The computer program product of any of clauses 16-19, wherein applying the change to the environmental condition of the interior of the dwelling with the control system is responsive to not matching the environmental parameter detected by the at least one sensor to an environmental parameter within the historical data.

While various spatial and directional terms, such as top, bottom, lower, mid, lateral, horizontal, vertical, front and the like may be used to describe embodiments of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

The term "obtains" and "obtaining", as used in connection with data, signals, information and the like, include at least one of i) accessing memory of an external device or remote server where the data, signals, information, etc. are stored, ii) receiving the data, signals, information, etc. over a wireless communications link between the base device and a secondary device, iii) receiving the data, signals, information, etc. at a remote server over a network connection, and/or iv) receiving the data, signals, information, etc. from a user interface input or command manually inputted by a user at the user interface. The obtaining operation, when from the perspective of a base device, may include sensing new signals in real time, and/or accessing memory to read stored data, signals, information, etc. from memory within the base device. The obtaining operation, when from the perspective of a secondary device, includes receiving the data, signals, information, etc. at a transceiver of the secondary device where the data, signals, information, etc. are transmitted from a base device and/or a remote server. The obtaining operation may be from the perspective of a remote server, such as when receiving the data, signals, information, etc. at a network interface from a local external device and/or directly from a base device. The remote server may also obtain the data, signals, information, etc. from local memory and/or from other memory, such as within a cloud storage environment and/or from the memory of a personal computer.

It is to be understood that the above description is intended to be illustrative, and not restrictive. For example, the above-described embodiments (and/or aspects thereof) may be used in combination with each other. In addition, many modifications may be made to adapt a particular situation or material to the teachings of the various embodiments of the disclosure without departing from their scope. While the dimensions and types of materials described herein are intended to define the parameters of the various embodiments of the disclosure, the embodiments are by no means limiting and are exemplary embodiments. Many other embodiments will be apparent to those of skill in the art upon reviewing the above description. In the appended claims, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various embodiments of the disclosure, including the best mode, and also to enable any person skilled in the art to practice the various embodiments of the disclosure, including making and using any devices or systems and performing any incorporated methods. The patentable scope of the various embodiments of the disclosure is defined by the claims.

## Claims

1. A heating, ventilation, and air conditioning system (100, 206) for a dwelling (112, 202) comprising:
a heating system (104) configured to heat an interior (110) of the dwelling;
an air conditioning system (108) configured to cool the interior of the dwelling;
a ventilation system (106) coupled to the heating system and air conditioning system and configured to convey air into areas within the dwelling;
a control system (102, 214, 300) operably coupled to the heating system, the air conditioning system, and the ventilation system, comprising:
at least one sensor (113, 216, 306) positioned and configured to detect an environmental parameter related to the interior of the dwelling;
one or more processors (302) for receiving data generated by the at least one sensor and configured to:
obtain (403) an instruction to vary an environmental condition of the interior of the dwelling;
analyze (404) the environmental parameter detected by the at least one sensor in response to receiving the instruction to vary the environmental condition of the interior of the dwelling; and
determine (406) whether to ignore the instruction to vary the environmental condition of the interior of the dwelling based on an analysis of the environmental parameter,
**characterized in that** the instruction is ignored when an environmental anomaly is determined not to be present, an anomaly being detected if the analysis determines predetermined changes in the environmental parameter.

2. The heating, ventilation, and air conditioning system of claim 1, wherein the one or more processors are further configured to:
ignore (408) the instruction to vary the environmental condition of the interior of the dwelling based on the analysis of the environmental parameter.

3. The heating, ventilation, and air conditioning system of any of claims 1-2, wherein the one or more processors are further configured to:
vary (411) the environmental condition of the interior of the dwelling based on the analysis of the environmental parameter after ignoring the instruction to vary the environmental condition.

4. The heating, ventilation, and air conditioning system of any of claims 1-3, wherein the one or more processors are further configured to, responsive to not ignoring the instruction to vary the environmental condition of the interior of the dwelling, compare (414) the environmental parameter detected by the at least one sensor to an environmental parameter within historical data in a local storage medium.

5. The heating ventilation and air conditioning system of claim 4, wherein the one or more processors are further configured to responsive to not matching the environmental parameter detected by the at least one sensor to the environmental parameter within the historical data, determine and apply (418) a change with the control system based on the environmental parameter.

6. The heating, ventilation, and air conditioning system of claim 5, wherein the one or more processors are further configured to, record (420) the environmental parameter and the change determined in the historical data.

7. The heating, ventilation, and air conditioning system of any of claims 4-6, wherein the one or more processors are further configured to, responsive to matching the environmental parameter detected by the at least one sensor to the environmental parameter within the historical data, apply (422) a change with the control system.

8. The heating, ventilation, and air conditioning system of any of claims 1-7, wherein the obtained instruction to vary an environmental condition of the interior of the dwelling is received from a user interface (310).

9. The heating, ventilation, and air conditioning system of any of claims 1-8, wherein the environmental parameter comprises at least one of temperature data, humidity data, occupancy positioning data, or air flow data.

10. A computer implemented method (400), comprising:
under control of one or more processors programmed with specific executable instructions,
receiving (403) an instruction to vary an environmental condition of an interior of a dwelling (112, 202);
analyzing (404) an environmental parameter detected by at least one sensor (113, 216, 306) in response to receiving the instruction to vary the environmental condition of the interior of the dwelling; and
determining (406) whether to ignore the instruction to vary the environmental condition of the interior of the dwelling based on an analysis of the environmental parameter
**characterized in that** the instruction is ignored when an environmental anomaly is determined not to be present, an anomaly being detected if the analysis determines predetermined changes in the environmental parameter.

11. The method of claim 10, further comprising:
under control of one or more processors programmed with specific executable instructions,
ignoring (408) the instruction to vary the environmental condition of the interior of the dwelling based on the analysis of the environmental parameter, and
varying (411) the environmental condition of the interior of the dwelling based on the analysis of the environmental parameter after ignoring the instruction to vary the environmental condition.

12. The method of any of claims 10-11, further comprising:
under control of one or more processors programmed with specific executable instructions,
responsive to not ignoring the instruction to vary the environmental condition of the interior of the dwelling, comparing (414) the environmental parameter detected by the at least one sensor to an environmental parameter within historical data in a local storage medium.

13. The method of claim 12 further comprising:
under control of one or more processors programmed with specific executable instructions,
responsive to not matching the environmental parameter detected by the at least one sensor to the environmental parameter within the historical data, determine and apply (418) a change with the control system based on the environmental parameter.

14. The method of claim 13 further comprising:
under control of one or more processors programmed with specific executable instructions,
recording (420) the environmental parameter and the change determined in the historical data.

15. The method of any of claims 12-14 further comprising:
under control of one or more processors programmed with specific executable instructions,
responsive to matching the environmental parameter detected by the at least one sensor to the environmental parameter within the historical data, apply (422) a change with the control system.

## Patentansprüche

1. Heizungs-, Lüftungs- und Klimaanlagensystem (100, 206) für eine Wohnstätte (112, 202), umfassend:
ein Heizungssystem (104), das konfiguriert ist, um ein Inneres (110) der Wohnstätte zu heizen;
ein Klimaanlagensystem (108), das konfiguriert ist, um das Innere der Wohnstätte zu kühlen;
ein Lüftungssystem (106), das mit dem Heizungssystem und dem Klimaanlagensystem gekoppelt und konfiguriert ist, um Luft in Bereiche innerhalb der Wohnstätte zu leiten;
ein Steuerungssystem (102, 214, 300), das betriebsfähig mit dem Heizungssystem, dem Klimaanlagensystem und dem Lüftungssystem gekoppelt ist, umfassend:
mindestens einen Sensor (113, 216, 306), der positioniert und konfiguriert ist, um einen Umgebungsparameter zu detektieren, der das Innere der Wohnstätte betrifft;
einen oder mehrere Prozessoren (302) zum Empfangen von Daten, die von dem mindestens einen Sensor erzeugt werden und konfiguriert sind zum:
Erhalten (403) einer Anweisung, eine Umgebungsbedingung des Inneren der Wohnstätte zu variieren;
Analysieren (404) des von dem mindestens einen Sensor detektierten Umgebungsparameters als Antwort auf Empfangen der Anweisung, die Umgebungsbedingung des Inneren der Wohnstätte zu variieren; und
Bestimmen (406), ob die Anweisung, die Umgebungsbedingung des Inneren der Wohnstätte zu variieren, basierend auf einer Analyse des Umgebungsparameters ignoriert werden soll,
**dadurch gekennzeichnet, dass** die Anweisung ignoriert wird, wenn bestimmt wird, dass eine Umgebungsanomalie nicht vorhanden ist, wobei eine Anomalie detektiert wird, falls die Analyse vorbestimmte Änderungen in dem Umgebungsparameter bestimmt.

2. Heizungs-, Lüftungs- und Klimaanlagensystem nach Anspruch 1, wobei der eine oder die mehreren Prozessoren weiter konfiguriert sind zum:
Ignorieren (408) der Anweisung, die Umgebungsbedingung des Inneren der Wohnstätte zu variieren, basierend auf der Analyse des Umgebungsparameters.

3. Heizungs-, Lüftungs- und Klimaanlagensystem nach einem der Ansprüche 1-2, wobei der eine oder die mehreren Prozessoren weiter konfiguriert sind zum:
Variieren (411) der Umgebungsbedingung des Inneren der Wohnstätte basierend auf der Analyse des Umgebungsparameters nach dem Ignorieren der Anweisung, die Umgebungsbedingung zu variieren.

4. Heizungs-, Lüftungs- und Klimaanlagensystem nach einem der Ansprüche 1-3, wobei der eine oder die mehreren Prozessoren weiter konfiguriert sind, um als Antwort auf Nicht-Ignorieren der Anweisung, die Umgebungsbedingung des Inneren der Wohnstätte zu variieren, den von dem mindestens einen Sensor detektierten Umgebungsparameter mit einem Umgebungsparameter innerhalb von Verlaufsdaten in einem lokalen Speichermedium zu vergleichen (414).

5. Heizungs-, Lüftungs- und Klimaanlagensystem nach Anspruch 4, wobei der eine oder die mehreren Prozessoren weiter konfiguriert sind, um als Antwort auf Nicht-Übereinstimmen des von dem mindestens einen Sensor detektierten Umgebungsparameters mit dem Umgebungsparameter innerhalb der Verlaufsdaten eine Änderung an dem Steuerungssystem basierend auf dem Umgebungsparameter zu bestimmen und anzuwenden (418).

6. Heizungs-, Lüftungs- und Klimaanlagensystem nach Anspruch 5, wobei der eine oder die mehreren Prozessoren weiter konfiguriert sind, um den Umgebungsparameter und die in den Verlaufsdaten bestimmte Änderung aufzuzeichnen (420).

7. Heizungs-, Lüftungs- und Klimaanlagensystem nach einem der Ansprüche 4-6, wobei der eine oder die mehreren Prozessoren weiter konfiguriert sind, um als Antwort auf Übereinstimmen des von dem mindestens einen Sensor detektierten Umgebungsparameters mit dem Umgebungsparameter innerhalb der Verlaufsdaten eine Änderung mit dem Steuerungssystem anzuwenden (422).

8. Heizungs-, Lüftungs- und Klimaanlagensystem nach einem der Ansprüche 1-7, wobei die erhaltene Anweisung, die Umgebungsbedingung des Inneren der Wohnstätte zu variieren, von einer Benutzerschnittstelle (310) empfangen wird.

9. Heizungs-, Lüftungs- und Klimaanlagensystem nach einem der Ansprüche 1-8, wobei der Umgebungsparameter mindestens eines aus Temperaturdaten, Feuchtigkeitsdaten, Belegungspositionierungsdaten oder Luftstromdaten umfasst.

10. Computerimplementiertes Verfahren (400), umfassend:
unter Steuerung eines oder mehrerer Prozessoren, die mit spezifischen ausführbaren Anweisungen programmiert sind,
Empfangen (403) einer Anweisung, eine Umgebungsbedingung eines Inneren einer Wohnstätte (112, 202) zu variieren;
Analysieren (404) eines von mindestens einem Sensor (113, 216, 306) detektierten Umgebungsparameters als Antwort auf Empfangen der Anweisung, die Umgebungsbedingung des Inneren der Wohnstätte zu variieren; und
Bestimmen (406), ob die Anweisung, die Umgebungsbedingung des Inneren der Wohnstätte zu variieren, basierend auf einer Analyse des Umgebungsparameters ignoriert werden soll
**dadurch gekennzeichnet, dass** die Anweisung ignoriert wird, wenn bestimmt wird, dass eine Umgebungsanomalie nicht vorhanden ist, wobei eine Anomalie detektiert wird, falls die Analyse vorbestimmte Änderungen in dem Umgebungsparameter bestimmt.

11. Verfahren nach Anspruch 10, weiter umfassend:
unter Steuerung eines oder mehrerer Prozessoren, die mit spezifischen ausführbaren Anweisungen programmiert sind,
Ignorieren (408) der Anweisung, die Umgebungsbedingung des Inneren der Wohnstätte zu variieren, basierend auf der Analyse des Umgebungsparameters, und
Variieren (411) der Umgebungsbedingung des Inneren der Wohnstätte basierend auf der Analyse des Umgebungsparameters nach dem Ignorieren der Anweisung, die Umgebungsbedingung zu variieren.

12. Verfahren nach einem der Ansprüche 10-11, weiter umfassend:
unter Steuerung eines oder mehrerer Prozessoren, die mit spezifischen ausführbaren Anweisungen programmiert sind,
als Antwort auf Nicht-Ignorieren der Anweisung, die Umgebungsbedingung des Inneren der Wohnstätte zu variieren, den von dem mindestens einen Sensor detektierten Umgebungsparameter mit einem Umgebungsparameter innerhalb von Verlaufsdaten in einem lokalen Speichermedium zu vergleichen (414).

13. Verfahren nach Anspruch 12, weiter umfassend:
unter Steuerung eines oder mehrerer Prozessoren, die mit spezifischen ausführbaren Anweisungen programmiert sind,
als Antwort auf Nicht-Übereinstimmen des von dem mindestens einen Sensor detektierten Umgebungsparameters mit dem Umgebungsparameter innerhalb der Verlaufsdaten eine Änderung an dem Steuerungssystem basierend auf dem Umgebungsparameter zu bestimmen und anzuwenden (418).

14. Verfahren nach Anspruch 13, weiter umfassend:
unter Steuerung eines oder mehrerer Prozessoren, die mit spezifischen ausführbaren Anweisungen programmiert sind,
Aufzeichnen (420) des Umgebungsparameters und der in den Verlaufsdaten bestimmten Änderung.

15. Verfahren nach einem der Ansprüche 12-14, weiter umfassend:
unter Steuerung eines oder mehrerer Prozessoren, die mit spezifischen ausführbaren Anweisungen programmiert sind,
als Antwort auf Übereinstimmen des von dem mindestens einen Sensor detektierten Umgebungsparameters mit dem Umgebungsparameter innerhalb der Verlaufsdaten eine Änderung an dem Steuerungssystem anzuwenden (422).

## Revendications

1. Système de chauffage, de ventilation et de climatisation (100, 206) pour un logement (112, 202) comprenant :
un système de chauffage (104) configuré pour chauffer un intérieur (110) du logement ;
un système de climatisation (108) configuré pour refroidir l'intérieur du logement ;
un système de ventilation (106) couplé au système de chauffage et au système de climatisation et configuré pour acheminer l'air dans les zones du logement ;
un système de commande (102, 214, 300) couplé de manière opérationnelle au système de chauffage, au système de climatisation et au système de ventilation, comprenant :
au moins un capteur (113, 216, 306) positionné et configuré pour détecter un paramètre environnemental lié à l'intérieur du logement ; un ou plusieurs processeurs (302) pour recevoir des données générées par le au moins un capteur et configurés pour :
obtenir (403) une instruction pour faire varier une condition environnementale de l'intérieur du logement ;
analyser (404) le paramètre environnemental détecté par le au moins un capteur en réponse à la réception de l'instruction pour faire varier la condition environnementale de l'intérieur du logement ; et
déterminer (406) s'il convient d'ignorer l'instruction pour faire varier la condition environnementale de l'intérieur du logement sur la base d'une analyse du paramètre environnemental,
**caractérisé en ce que** l'instruction est ignorée lorsqu'il est déterminé qu'il n'y a pas d'anomalie environnementale, une anomalie étant détectée si l'analyse détermine des changements prédéterminés dans le paramètre environnemental.

2. Système de chauffage, de ventilation et de climatisation selon la revendication 1, dans lequel les un ou plusieurs processeurs sont en outre configurés pour :
ignorer (408) l'instruction pour faire varier la condition environnementale de l'intérieur du logement sur la base de l'analyse du paramètre environnemental.

3. Système de chauffage, de ventilation et de climatisation selon l'une quelconque des revendications 1 à 2, dans lequel les un ou plusieurs processeurs sont en outre configurés pour :
faire varier (411) la condition environnementale de l'intérieur du logement sur la base de l'analyse du paramètre environnemental après avoir ignoré l'instruction pour faire varier la condition environnementale.

4. Système de chauffage, de ventilation et de climatisation selon l'une quelconque des revendications 1 à 3, dans lequel les un ou plusieurs processeurs sont en outre configurés pour, en réponse au fait de ne pas ignorer l'instruction pour faire varier la condition environnementale de l'intérieur du logement, comparer (414) le paramètre environnemental détecté par le au moins un capteur à un paramètre environnemental figurant dans les données historiques d'un support de stockage local.

5. Système de chauffage, de ventilation et de climatisation selon la revendication 4, dans lequel les un ou plusieurs processeurs sont en outre configurés pour déterminer et appliquer (418) un changement au système de commande sur la base du paramètre environnemental en cas de non-concordance entre le paramètre environnemental détecté par le au moins un capteur et le paramètre environnemental figurant dans les données historiques.

6. Système de chauffage, de ventilation et de climatisation selon la revendication 5, dans lequel les un ou plusieurs processeurs sont en outre configurés pour enregistrer (420) le paramètre environnemental et le changement déterminé dans les données historiques.

7. Système de chauffage, de ventilation et de climatisation selon l'une quelconque des revendications 4 à 6, dans lequel les un ou plusieurs processeurs sont en outre configurés pour appliquer (422) un changement au système de commande en cas de concordance entre le paramètre environnemental détecté par le au moins un capteur et le paramètre environnemental figurant dans les données historiques.

8. Système de chauffage, de ventilation et de climatisation selon l'une quelconque des revendications 1 à 7, dans lequel l'instruction obtenue pour faire varier une condition environnementale de l'intérieur du logement est reçue à partir d'une interface utilisateur (310).

9. Système de chauffage, de ventilation et de climatisation selon l'une quelconque des revendications 1 à 8, dans lequel le paramètre environnemental comprend au moins l'une des données de température, des données d'humidité, des données de positionnement d'occupation ou des données de flux d'air.

10. Procédé mis en œuvre par ordinateur (400), comprenant : sous commande de un ou plusieurs processeurs programmés avec des instructions exécutables spécifiques,
la réception (403) d'une instruction pour faire varier une condition environnementale d'un intérieur d'un logement (112, 202) ;
l'analyse (404) d'un paramètre environnemental détecté par au moins un capteur (113, 216, 306) en réponse à la réception de l'instruction pour faire varier la condition environnementale de l'intérieur du logement ; et
la détermination (406) de savoir s'il convient d'ignorer l'instruction pour faire varier la condition environnementale de l'intérieur du logement sur la base d'une analyse du paramètre environnemental
**caractérisé en ce que** l'instruction est ignorée lorsqu'il est déterminé qu'il n'y a pas d'anomalie environnementale, une anomalie étant détectée si l'analyse détermine des changements prédéterminés dans le paramètre environnemental.

11. Procédé selon la revendication 10, comprenant en outre : sous commande de un ou plusieurs processeurs programmés avec des instructions exécutables spécifiques,
ignorer (408) l'instruction pour faire varier la condition environnementale de l'intérieur du logement sur la base de l'analyse du paramètre environnemental, et faire varier (411) la condition environnementale de l'intérieur du logement sur la base de l'analyse du paramètre environnemental après avoir ignoré l'instruction pour faire varier la condition environnementale.

12. Procédé selon l'une quelconque des revendications 10 à 11, comprenant en outre :
sous commande de un ou plusieurs processeurs programmés avec des instructions exécutables spécifiques,
en réponse au fait de ne pas ignorer l'instruction pour faire varier la condition environnementale de l'intérieur du logement, la comparaison (414) du paramètre environnemental détecté par le au moins un capteur à un paramètre environnemental figurant dans les données historiques d'un support de stockage local.

13. Procédé selon la revendication 12, comprenant en outre :
sous commande de un ou plusieurs processeurs programmés avec des instructions exécutables spécifiques,
la détermination et l'application (418) d'un changement au système de commande sur la base du paramètre environnemental en cas de non-concordance entre le paramètre environnemental détecté par le au moins un capteur et le paramètre environnemental figurant dans les données historiques.

14. Procédé selon la revendication 13, comprenant en outre :
sous commande de un ou plusieurs processeurs programmés avec des instructions exécutables spécifiques,
l'enregistrement (420) du paramètre environnemental et du changement déterminé dans les données historiques.

15. Procédé selon l'une quelconque des revendications 12 à 14, comprenant en outre :
sous commande de un ou plusieurs processeurs programmés avec des instructions exécutables spécifiques,
l'application (422) d'un changement au système de commande en cas de concordance entre le paramètre environnemental détecté par le au moins un capteur et le paramètre environnemental figurant dans les données historiques.
